# EUROPÄISCHE PATENTANMELDUNG

(11) **EP 4 838 170 A1**
(43) Veröffentlichungstag der Anmeldung: **11.11.2026**
(21) Anmeldenummer: 26174824.8
(22) Anmeldetag: 27.04.2026
(51) Int. Cl.: G01B 9/0209

(54) **MESSVORRICHTUNG UND VERFAHREN ZUR VOREINSTELLUNG DER MESSVORRICHTUNG**

(30) Priorität: 05.05.2025 DE 102025117133
(71) Anmelder: Carl Mahr Holding GmbH, 37073 Göttingen (DE)
(72) Erfinder: Weber, Mark, 47506 Neukirchen-Vluyn (DE); Lensing, Thomas, 76316 Malsch (DE)
(74) Vertreter: Rüger Abel IP Legal Solutions GmbH

(57) **Zusammenfassung**

Die Erfindung betrifft eine Messvorrichtung (10) sowie ein Verfahren zur Voreinstellung, um für ein optisches Messverfahren einen geeigneten Farbkanal (R, G, B) für ein anschließend durchzuführendes optisches Messverfahren auszuwählen. Es kann ein Standardfarbkanal aus den mehreren Farbkanälen (R, G, B) ausgewählt und für die Messung verwendet werden. Bei einer bevorzugten Ausführung der Erfindung kann die Eignung dieses Standardfarbkanals mittels eines Prüfverfahrens (VP) geprüft werden: Mittels einer Weißlichtquelle (11) wird dazu Weißlicht über ein in einer Messposition (P) angeordnetes Objektiv (14) der Messvorrichtung (10) auf ein zu messendes Objekt (19) abgestrahlt, dort reflektiert und wieder vom Objektiv (14) empfangen. Das vom Objekt (19) reflektierte und vom Objektiv (14) empfangene Licht wird über einen an einer Mustereinrichtung (32) vorhandenen Zwischenbildbereich (33) auf einen Kamerasensor (24) einer Farbkamera (23) geleitet. Im Zwischenbildbereich (33) wird durch die Mustereinrichtung (35) ein Lichtmuster (L) erzeugt. Die dabei vom Kamerasensor (24) erzeugten Kamerasensorsignale (Cᵢ) werden in einer Auswerteeinheit (46) ausgewertet und basierend darauf für ein nachfolgendes Messverfahrens ein geeigneter Farbkanal (R oder G oder B) des Kamerasensors (24) bzw. der Farbkamera (23) ausgewählt.

## Beschreibung

Die Erfindung betrifft eine Messvorrichtung und ein Verfahren, die insbesondere dazu eingerichtet sind, eine Voreinstellung der Messvorrichtung vor der eigentlichen optischen Messung eines zu messenden Objekts vorzunehmen.

Die Firma Keyence bietet unter dem Namen "VK-X3000" ein Messgerät (Mikroskop) an, mit dem ein dreidimensionales Oberflächenprofil eines Objekts ermitteln werden kann. Das Gerät ist in der Lage, mittels unterschiedlicher Messverfahren zu arbeiten, nämlich mittels Messverfahren durch Fokusvariation, durch eine konfokale Lasermessung oder durch Weißlichtinterferometrie. Für die unterschiedlichen Messungen hat das Gerät unterschiedliche optische Pfade und verschiedene Lichtquellen.

DE 10 2012 009 836 A1 offenbart ein Lichtmikroskop, mittels dem sowohl Messungen durch konfokale Mikroskopie als auch durch Fokusvariation durchgeführt werden können. Es werden zwei Lichtwege erzeugt, wobei in einem Lichtweg Licht an einem strukturierten Element reflektiert und zum Objektiv weitergeleitet wird, während in einem anderen Lichtweg das Licht durch das strukturierte Element hindurch transmittiert und zum Objektiv weitergeleitet wird, wobei letzterer Lichtweg zur konfokalen Mikroskopie dient. Ein Ausführungsbeispiel für ein solches strukturiertes Element ist beispielsweise in WO 2007/121706 A1 offenbart.

Auch in DE 10 2018 217 786 A1 wird die Möglichkeit beschrieben, ein Objekt sowohl durch eine konfokale Messung als auch durch Fokusvariation zu messen.

EP 3 568 667 A1 beschreibt ein Messprinzip, bei dem ein Objektiv mit großer chromatischer Aberration eingesetzt wird, um lichtwellenlängenabhängig unterschiedliche Fokusebenen zu erzeugen und somit insgesamt eine große Fokustiefe beim Messen des Objekts zu erreichen.

Beleuchtungseinrichtungen für solche Messgeräte sind beispielsweise in WO 2002/082011 A1 oder AT 515 745 A1 oder DE 20 2005 013 876 U1 beschrieben.

Ein Verfahren und eine Vorrichtung zur dreidimensionalen Vermessung einer Hautoberfläche und oberflächennaher Hautschichten ist in DE 10 2013 008 278 B4 beschrieben. Dabei wird mithilfe eines Scanners ein Bilderstapel erzeugt und daraus ein 3D-Bild ermittelt.

Einrichtungen zur konfokalen Messung sind außerdem in WO 2024/012636 A1 oder DE 10 2017 218 771 A1 oder DE 10 2016 115 827 A1 oder DE 10 2016 006 107 A1 oder DE 10 2015 115 615 A1 bekannt.

Bei optischen Messungen werden geeignete Messverfahren für eine jeweils gestellte Messaufgabe ausgewählt. Beispielsweise kann mithilfe einer konfokalen Messung eine Oberflächentopographie sehr genau gemessen werden. Die konfokale Messung hat allerdings Nachteile, wenn an der Oberfläche des zu messenden Objekts steile Flanken auftreten, weil an diesen Stellen keine oder nur sehr eingeschränkt Messwerte generiert werden können, die die Oberflächentopographie ausreichend genau beschreiben. Die Auflösung in Messrichtung (entlang der optischen Achse des Objektivs) ist dabei auch abhängig von der Qualität des Objektivs und insbesondere dessen numerischer Apertur. Beispielsweise können Objektive mit geringerer Vergrößerung in der Messrichtung nur eine eingeschränkte Auflösung zur Verfügung stellen, was das Messen von größeren Oberflächenbereichen sehr zeitaufwendig macht.

Ebene Oberflächen können im Wesentlichen unabhängig von den Eigenschaften eines Objektivs mittels Weißlichtinterferometrie in guter Auflösung gemessen werden. Allerdings ist das Messen von steilen Flanken in Bereichen der Oberfläche des Objekts in der Regel noch stärker eingeschränkt als bei einer konfokalen Messung. Abhängig von der Gestalt und Qualität der Oberfläche eines Objekts neigt die Weißlichtinterferometrie zur Artefaktbildung.

Für die Messung von steilen Flanken an Objektoberflächen ist ein Messverfahren basierend auf der Fokusvariation besser geeignet. Bei der Fokusvariation wird eine Relativlage zwischen dem Objekt bzw. der Objektoberfläche einerseits und einer Fokusebene des Objektivs andererseits in Messrichtung (entlang der optischen Achse des Objektivs) verändert. Bei diesem Verfahren ist es allerdings erforderlich, dass die Oberfläche des zu messenden Objekts eine ausreichende Kontrastbestimmung ermöglicht.

Das Kombinieren mehrerer Messverfahren in einer Vorrichtung erfordert bislang ein großer Aufwand, weil Messeinheiten für die unterschiedlichen Messverfahren bereitgestellt werden müssen. Die Bedienperson ist bislang gefordert die Messvorrichtung an die Messaufgabe angepasst einzusetzen und die erforderlichen Einstellungen vorzunehmen.

Es kann daher als Aufgabe der vorliegenden Erfindung angesehen werden, eine Messvorrichtung und ein Verfahren zu schaffen, das einen einfachen konstruktiven Aufbau ermöglicht und vorzugsweise auch eine einfachere Anpassung an die Messaufgabe bietet.

Diese Aufgabe wird durch eine Messvorrichtung mit den Merkmalen des Patentanspruches 1 sowie ein Verfahren mit den Merkmalen des Patentanspruches 16 gelöst.

Die erfindungsgemäße Messvorrichtung ist insbesondere dazu eingerichtet, ein konfokales Messverfahren und/oder ein eine Fokusposition variierendes Messverfahren und/oder ein Weißlicht-Interferometrie-Messverfahren durchzuführen. Die Fokusposition ist dabei eine Relativposition in einer Messrichtung zwischen einer Fokusebene eines Objektivs und einem zu messenden Objekt bzw. einer zu messenden Objektoberfläche. Dies gilt unabhängig davon, ob das Objektiv eine einzige Fokusebene oder in Messrichtung eine Fokuszone aus mehreren Fokusebenen aufweist. In jedem Fall kann eine Fokusebene definiert werden.

Die Messvorrichtung hat eine Weißlichtquelle, die als Lichtquelle für sämtliche durch die Messvorrichtung ausführbare Messverfahren verwendet wird, zumindest die Messverfahren, in den Licht der Weißlichtquelle durch das Objektiv in Richtung zu dem zu messenden Objekt geleitet wird.

Die Weißlichtquelle emittiert Weißlicht über einen breiten Bereich des Lichtwellenspektrums, beispielsweise zumindest in einem Bereich von 400 oder 450 nm bis 750 oder 780 nm oder mehr. Optional können auch Spektralbereiche mit geringerer Wellenlänge oder größerer Wellenlänge enthalten sein.

Die Messvorrichtung hat außerdem eine Farbkamera mit mehreren Farbkanälen. Jeder Farbkanal ist einem Lichtwellenlängenbereich zugeordnet. Beispielsweise können Farbkanäle für rotes Licht, grünes Licht und blaues Licht vorhanden sein. Der Farbkanal von rotem Licht kann Lichtwellenlängenbereiche von 560 nm oder von 580 nm oder von 600 nm bis 780 nm umfassen. Der Farbkanal für grünes Licht kann Lichtwellenlängenbereiche von 500 nm bis 560 nm umfassen. Der Farbkanal für blaues Licht kann Lichtwellenlängen von 425 nm oder von 450 nm bis 475 nm oder bis 500 nm umfassen.

Ein Kamerasensor der Farbkamera hat für jeden Farbkanal mehrere Farbpixel, also beispielsweise mehrere Farbpixel für den roten Farbkanal, mehrere Farbpixel für den grünen Farbkanal und mehrere Farbpixel für den blauen Farbkanal. Auf dem Kamerasensor werden Pixelgruppen gebildet. Jede Pixelgruppe weist zumindest ein Farbpixel jedes vorhandenen Farbkanals auf. Die Farbpixel einer Pixelgruppe sind unmittelbar nebeneinander angeordnet und bedecken beispielsweise einen rechteckigen oder quadratischen Flächenabschnitt auf der Sensorfläche des Kamerasensors. Die Pixelgruppen sind nebeneinander und über die Sensorfläche verteilt angeordnet, beispielsweise matrixförmig in Zeilen und Spalten.

Die Anordnung der Farbpixel innerhalb der mehreren Pixelgruppen ist vorzugsweise identisch. Beispielsweise kann jede Pixelgruppe vier Farbpixel aufweisen, wobei ein Farbkanal (z.B. der grüne Farbkanal) doppelt so viele Farbpixel pro Pixelgruppe aufweist, wie die anderen Farbkanäle.

Zu der Messvorrichtung gehört wenigstens ein Objektiv. Vorzugsweise sind mehrere Objektive vorhanden, die manuell oder automatisch bewegt werden können. Eines der vorhandenen Objektive befindet sich in einer Messposition oder kann in eine Messposition gebracht werden. Das in der Messposition angeordnete Objektiv dient zur Messung und ist im Lichtweg zwischen dem zu messenden Objekt und dem Kamerasensor positioniert und ist bei einer Hellfeldbeleuchtung außerdem im Lichtweg zwischen der Weißlichtquelle und dem zu messenden Objekt angeordnet.

Die Messvorrichtung hat außerdem eine Positioniereinrichtung. Die Positioniereinrichtung ist dazu eingerichtet, die Fokusposition in Messrichtung zu verändern. Die Messrichtung ist parallel zur optischen Achse des in der Messposition angeordneten Objektivs ausgerichtet. Die Messrichtung kann beispielsweise beim Betrieb der Messvorrichtung vertikal oder schräg geneigt gegenüber der Horizontalen ausgerichtet sein.

Zu der Messvorrichtung gehört außerdem eine Mustereinrichtung. Die Mustereinrichtung ist dazu eingerichtet, das von der Weißlichtquelle abgestrahlte Weißlicht zu verändern und in einem Zwischenbildbereich der Farbkamera ein Lichtmuster mit wenigstens einem beleuchteten Bereich und wenigstens einem unbeleuchteten Bereich zu erzeugen. Die Mustereinrichtung und der Zwischenbildbereich der Farbkamera sind im Lichtweg zwischen dem Objektiv und dem Kamerasensor und (Im Falle einer Hellfeldbeleuchtung) dabei auch im Lichtweg zwischen der Weißlichtquelle und dem Objektiv angeordnet. Die Mustereinrichtung kann eine bewegbare Musterscheibe sein oder auch eine aktiv steuerbare Matrix aufweisen (zum Beispiel LED-Matrix). Zur Erzeugung der beleuchteten Bereiche kann die Mustereinrichtung transparente Bereiche und zur Erzeugung der unbeleuchteten Bereiche kann die Mustereinrichtung nicht transparente Bereiche aufweisen. Die Transparenzeigenschaft bezieht sich hier auf das verwendete Weißlicht der Weißlichtquelle.

Die Lichtmuster können auf verschiedenen Lichtmustertypen basieren. Zumindest zwei sich von der Mustergeometrie des wenigstens einen beleuchteten Bereichs unterscheidende Lichtmustertypen können durch die Mustereinrichtung erzeugt werden.

Insbesondere weist ein erster Lichtmustertyp einen zusammenhängenden beleuchteten Bereich im Zwischenbildbereich auf, dessen Licht auf mehrere unmittelbar nebeneinander angeordnete Farbpixelgruppen gelangt, beispielsweise Farbpixelgruppen von wenigstens einer vollständigen Zeile auf dem Kamerasensor. Bei diesem ersten Lichtmustertyp kann der beleuchtete Bereich des Lichtmusters beispielsweise streifenförmig sein seine Position im Zwischenbildbereich ändern während das variierende Lichtmuster des ersten Lichtmustertyps erzeugt wird. Somit können beispielsweise zeitlich nacheinander die Pixelgruppen in allen Zeilen des Kamerasensors einmal beleuchtet werden.

Bei einem zweiten Lichtmustertyps kann das Lichtmuster eine Vielzahl von insbesondere unregelmäßig innerhalb des Zwischenbildbereichs angeordneten beleuchteten Bereichen aufweisen, die beispielsweise punktförmig sein können und sozusagen Lichtflecken bilden. Unter einem punktförmig beleuchteten Bereich (bzw. Lichtfleck) wird ein beleuchteter Bereich verstanden, dessen Flächeninhalt gegenüber der Gesamtfläche des Zwischenbildbereichs klein ist und beispielsweise höchstens 5% oder höchstens 1% oder höchstens 0,5% oder höchstens 0,1% der Gesamtfläche des Zwischenbildbereichs umfasst. Die Geometrie solcher punktförmiger beleuchteter Bereiche (bzw. Lichtflecken) kann kreisrund oder polygonal eine andere beliebig wählbare Geometrie aufweisen. Insbesondere gelangt das Licht durch einen punktförmig gestalteten beleuchteten Bereich nur auf eine oder höchstens zwei bis vier unmittelbar benachbarte Pixelgruppen des Kamerasensors. Die Position der punktförmigen beleuchteten Bereiche (bzw. Lichtflecken) kann während der Durchführung des Messverfahrens und/oder eines optionalen Prüfverfahrens innerhalb des Zwischenbildbereichs variieren.

Diese beiden vorstehend beschriebenen Lichtmustertypen sind für die durch die Messvorrichtung ausführbaren Messverfahren und/oder das Prüfverfahren ausreichend.

Der Kamerasensor und die Positioniereinrichtung sind mit einer Recheneinrichtung kommunikationsverbunden. Die Recheneinrichtung stellt insbesondere eine Steuereinheit und eine Auswerteeinheit für die Messvorrichtung zur Verfügung. Die Recheneinrichtung kann beispielsweise einen Mikroprozessor und einen Speicher aufweisen, um einen Programmcode auszuführen.

Die Recheneinrichtung ist dazu eingerichtet, ein Verfahren zur Voreinstellung der Messvorrichtung durchzuführen, bei dem ein geeigneter Farbkanal der Farbkamera ermittelt und für ein nachfolgendes Messverfahren ausgewählt wird. Daher kann das Verfahren zur Voreinstellung auch als Auswahlverfahren bezeichnet werden.

Das Verfahren zur Voreinstellung kann im einfachsten Fall das automatische Auswählen eines Standardfarbkanals sein, der beispielsweise basierend auf den Eigenschaften der Weißlichtquelle und/oder des Kamerasensors vorgegeben sein kann. Beispielsweise kann als Standardfarbkanal der Farbkanal mit der größten Pixeldichte bzw. größten Anzahl an Pixeln auf der Sensorfläche des Kamerasensors ausgewählt werden.

Vorzugsweise kann eine Bedienperson eine vom zu messenden Objekt bzw. von der konkreten Messaufgabe abhängige Prüfung durchführen, um zu prüfen, ob der Standardfarbkanal geeignet ist oder sich ein anderer Farbkanal besser eignet. Dazu kann insbesondere wie nachfolgend beschrieben vorgegangen werden:

Bei dieser optionalen Prüfung im Rahmen des Auswahlverfahrens wird im Zwischenbildbereich zumindest ein vorgegebenes Lichtmuster erzeugt. Es werden vorzugsweise Lichtmuster aller Lichtmustertypen temporär während des Prüfverfahrens erzeugt, die für ein oder mehrere anschließend auszuführende optische Messverfahren ebenfalls verwendet werden.

Bei dieser optionalen Prüfung im Rahmen des Verfahrens zur Voreinstellung der Messvorrichtung wertet die Recheneinrichtung (bzw. Auswerteeinheit) Kamerasensorsignale des Kamerasensors aus, wobei die Kamerasensorsignale erfasst wurden, während das zumindest eine vorgegebene Lichtmuster im Zwischenbildbereich erzeugt wurde. Basierend auf den Kamerasensorsignalen wird dann ein einziger Farbkanal für ein nachfolgendes Messverfahren ausgewählt. Beispielsweise können die Farbpixel des roten Farbkanals, des grünen Farbkanals oder des blauen Farbkanals für die nachfolgende Messung verwendet werden.

Im Rahmen der Auswertung kann beispielsweise für jeden Farbkanal ein charakteristischer Parameter ermittelt werden, wobei die charakteristischen Parameter der Farbkanäle miteinander verglichen werden können. Ein charakteristischer Parameter kann beispielsweise von einem Intensitätswert des betreffenden Farbkanals abhängen. Der Intensitätswert kann eine für den betreffenden Farbkanal durch den Kamerasensor empfangene Strahlungsleistung beschreiben. Der Intensitätswert kann auch die für den jeweiligen Farbkanal durch die Weißlichtquelle emittierte Strahlungsleistung berücksichtigen und beispielsweise von einem Reflexionsgrad (Reflektanz) des betreffenden Farbkanals abhängen. Optional kann der charakteristische Parameter auch die Anzahl oder Dichte der Farbpixel des jeweiligen Farbkanals berücksichtigen, wenn die Pixelgruppen unterschiedlich viele Farbpixel für die vorhandenen Farbkanäle aufweisen.

Durch die Voreinstellung kann ein anschließend durchgeführtes optisches Messverfahren an die jeweilige Messaufgabe angepasst werden. Es kann ein Standardfarbkanal mit hoher Pixeldichte verwendet werden. Bei einer bevorzugten Ausführungsform kann optional im Rahmen einer Prüfung die Eignung des Standardfarbkanals geprüft und gegebenenfalls ein anderer Farbkanal ausgewählt werden. Optische Eigenschaften der Objektoberfläche des zu messenden Objekts werden berücksichtigt, um bei der anschließenden optischen Messung ein möglichst genaues Messergebnis zu erhalten. Beispielsweise hängt ein nachfolgendes Messverfahren basierend auf der Fokusvariation davon ab, wie gut sich ein Kontrast ermitteln lässt, was durch die Vorauswahl des hierfür geeigneten Farbkanals erheblich verbessert wird.

Die Messvorrichtung benötigt keine Laserlichtquelle und insbesondere keinen Laserscanner.

Wenn Aufnahmen bzw. Messungen durch die Farbkamera im Dunkelfeld vorteilhaft sind, kann zusätzlich zu der Weißlichtquelle eine Dunkelfeldbeleuchtung vorhanden sein, beispielsweise in Form einer an einem Objektiv anbringbaren Dunkelfeldbeleuchtung (zum Beispiel Ringlicht). Die Dunkelfeldbeleuchtung emittiert vorzugsweise Weißlicht. Für das Prüfverfahren wird in diesem Fall die Dunkelfelsbeleuchtung anstelle der Weißlichtquelle verwendet.

Während der Durchführung eines die Fokusposition variierenden Messverfahrens wird die Positioniereinrichtung dazu verwendet, die Fokusposition zu variieren und vorzugsweise stillstandslos innerhalb eines Fokusvariationsbereichs zu variieren. Der Fokusvariationsbereich kann in Messrichtung durch zwei Endpositionen bzw. Umkehrpositionen definiert sein, zwischen denen die Fokusposition variiert wird. Zum Verändern der Fokusposition kann die Positioniereinrichtung beispielsweise das in der Messposition angeordnete Objektiv in Messrichtung bewegen.

Die Positioniereinrichtung kann beispielsweise einen Piezoantrieb bzw. Piezomotor aufweisen. Die Fokusposition kann während des Messverfahrens zumindest einmal vollständig entlang des gesamten Fokusvariationsbereichs insbesondere stillstandslos verändert werden.

Es ist vorteilhaft, wenn ein Positionssensor vorhanden ist. Der Positionssensor kann beispielsweise der Positioniereinrichtung und/oder dem in der Messposition angeordneten Objektiv zugeordnet und dazu eingerichtet sein, die Fokusposition zu ermitteln. Beispielsweise kann der Positionssensor ein Dehnungsmessstreifen sein, insbesondere wenn die Positioniereinrichtung einen Piezoantrieb aufweist. Der Positionssensor stellt einen Fokuspositionswert für die Recheneinrichtung bereit.

Bei einer bevorzugten Ausführungsform kann die Mustereinrichtung scheiben- oder plattenförmig sein und sich schräg oder rechtwinklig zur Messrichtung erstrecken. Die plattenförmige Mustereinrichtung ragt in den Lichtweg zwischen dem Objektiv und dem Kamerasensor und optional auch in den Lichtweg zwischen der Weißlichtquelle und dem Objektiv hinein, so dass sich der Zwischenbildbereich der Farbkamera vollständig auf der Mustereinrichtung befindet.

Die Mustereinrichtung kann eine Musterscheibe sein, die parallel zu ihrer Erstreckungsebene - also schräg oder rechtwinklig zur Messrichtung - bewegbar ist. Beispielsweise kann sie um eine Drehachse drehbar sein, wobei die Drehachse rechtwinklig zur Erstreckungsebene der Musterscheibe ausgerichtet ist. Alternativ hierzu könnte die Musterscheibe auch in eine oder mehrere Raumrichtungen parallel zu ihrer Erstreckungsebene translatorisch bewegbar sein.

Zur Erzeugung des Lichtmusters kann die Musterscheibe transparente und intransparente Bereiche aufweisen, beispielsweise einen transparenten Streifen zur Erzeugung des Lichtmusters des ersten Lichtmustertyps und transparente punktförmige Bereiche zur Erzeugung der punktförmigen beleuchteten Bereiche des zweiten Lichtmustertyps in dem Zwischenbildbereich der Farbkamera. Durch die Bewegung der Musterscheibe kann entweder das Lichtmuster des ersten Lichtmustertyps oder das Lichtmuster des zweiten Lichtmustertyps durch den Zwischenbildbereich der Farbkamera bewegt werden. Die Lichtmuster sind also zeitlich variierend.

Die Musterscheibe kann bei einem Ausführungsbeispiel zumindest während einer Messung und/oder des optionalen Prüfverfahrens kontinuierlich bewegt werden und insbesondere kontinuierlich um die Drehachse gedreht werden.

Der Musterscheibe kann eine Positionserfassungseinrichtung zugeordnet sein. Die Positionserfassungseinrichtung ist dazu eingerichtet, einen Sensorsignal zu ermitteln und der Recheneinrichtung bereitzustellen. Das Sensorsignal gibt zumindest an, ob die Musterscheibe in wenigstens einer definierten Position ist oder sich außerhalb der wenigstens einer definierten Position befindet. Sind auf der Musterscheibe beispielsweise mehrere unterschiedliche Zonen zur Erzeugung unterschiedlicher Lichtmustertypen vorhanden, kann die Bewegung zumindest einer der Zonen der Musterscheibe in den Zwischenbildbereich hinein und/oder aus dem Zwischenbildbereich heraus durch die Positionserfassungseinrichtung detektiert und anhand des Sensorsignals angezeigt werden. Bei einem Ausführungsbeispiel kann die Positionserfassungseinrichtung dazu eingerichtet sein, das Bewegen des streifenförmigen transparenten Bereichs auf der Musterscheibe in den Zwischenbildbereich und/oder das Bewegen dieses streifenförmigen transparenten Bereichs aus dem Bilderfassungsbereich zu detektieren.

Die Positionserfassungseinrichtung kann beispielsweise eine oder mehrere Lichtschranken aufweisen.

Das in der Messposition angeordnete Objektiv und der Kamerasensor können bei einer Ausführungsform der Messvorrichtung entlang einer gemeinsamen optischen Achse angeordnet sein.

Zur Durchführung der Weißlichtinterferometrie kann die Messvorrichtung eine optische Einrichtung zur Bereitstellung eines Referenzlichtwegs zusätzlich zu dem Messlichtweg aufweisen, in dem das zu messende Objekt angeordnet ist. Der Referenzlichtweg kann beispielsweise durch ein als Interferenzobjektiv ausgebildetes Objektiv bereitgestellt werden. Das Interferenzobjektiv kann beispielsweise als Mireau-Objektiv ausgeführt sein.

Das erfindungsgemäße Verfahren für eine nachfolgende optische Messung kann unter Verwendung irgendeines Ausführungsbeispiels der Messvorrichtung durchgeführt werden.

Eines der Objektive wird in die Messposition im Lichtweg zwischen dem zu messenden Objekt und dem Kamerasensor der Farbkamera gebracht. Mittels der Weißlichtquelle wird Weißlicht emittiert und gelangt über das Objektiv auf die Oberfläche des zu messenden Objekts, wird dort zurück in das Objektiv reflektiert und zum Kamerasensor geleitet. Dabei wird mittels der Mustereinrichtung in dem Lichtweg zwischen dem Objektiv und dem Kamerasensor in einer Zwischenbildebene und innerhalb eines Zwischenbildbereichs der Farbkamera ein vorgegebenes Lichtmuster erzeugt. Dieses vorgegebene Lichtmuster entspricht zumindest einem Lichtmustertyp. Jedes Lichtmuster hat wenigstens einen beleuchteten Bereich innerhalb des Zwischenbildbereichs der Farbkamera, wodurch zumindest die Farbpixelgruppen der Farbkamera des Kamerasensors beleuchtet werden, die dem beleuchteten Bereich im Zwischenbildbereich zugeordnet sind. Die Farbpixelgruppen bzw. Farbpixel des Kamerasensors, die den unbeleuchteten Bereichen des Zwischenbildbereichs zugeordnet sind, werden nicht durch Licht beleuchtet, das vom Objekt durch das Objektiv durch den Zwischenbildbereich und weiter zum Kamerasensor geleitet wird. Das Lichtmuster im Zwischenbildbereich kann während des Prüfverfahrens zeitlich variieren, so dass zeitlich nacheinander unterschiedliche Farbpixel bzw. Farbpixelgruppen auf dem Kamerasensor beleuchtet werden.

Während im Zwischenbildbereich das vorgegebene Lichtmuster erzeugt wird, erzeugt der Kamerasensor Kamerasensorsignale, die beispielsweise von einer Recheneinrichtung ausgewertet werden. Basierend auf dem Auswerteergebnis wird ein einziger Farbkanal der Farbkamera für ein anschließend durchzuführendes Messverfahren bzw. für mehrere daraufhin durchzuführende Messverfahren für dieses zu messende Objekt ausgewählt. Es erfolgt daher eine Voreinstellung der Messvorrichtung für die optische Messung, die daher optimal an das aktuell zu messende Objekt angepasst werden kann.

Nachfolgend werden bevorzugte Ausführungsformen der Erfindung anhand der beigefügten Zeichnung im Einzelnen erläutert. In der Zeichnung zeigen:
Figur 1 eine vereinfachte schematische Prinzipdarstellung eines Ausführungsbeispiels einer Messvorrichtung,
Figur 2 eine schematische Prinzipdarstellung eines als Interferenzobjektiv ausgebildeten Objektivs der Messvorrichtung aus Figur 1,
Figur 3 eine schematische Darstellung eines Ausführungsbeispiels einer Mustereinrichtung in Form einer bewegbaren uns beispielsgemäß drehbaren Musterscheibe für die Messvorrichtung aus Figur 1,
Figuren 4a und 4b jeweils eine schematische Darstellung eines erzeugten Lichtmustertyps durch eine ansteuerbare Mustervorrichtung für die Messvorrichtung aus Figur 1,
Figur 5 eine schematische Prinzipdarstellung eines Kamerasensors einer Farbkamera für die Messvorrichtung aus Figur 1,
Figur 6 eine schematische Prinzipdarstellung einer Dunkelfeldbeleuchtung für die Messvorrichtung aus Figur 1,
Figur 7 ein Flussdiagramm eines Ausführungsbeispiels eines erfindungsgemäßen Verfahrens und
Figur 8 ein Flussdiagramm für Sub-Verfahrensschritte eines Verfahrensteils des Verfahrens aus Figur 7.

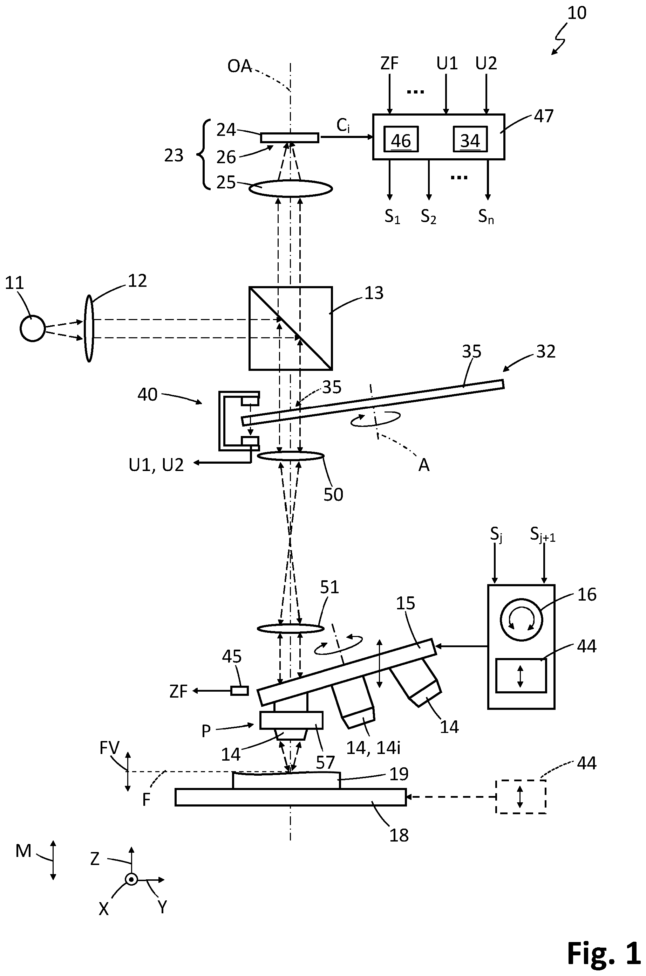

In Figur 1 ist nach Art eines Blockschaltbilds ein Ausführungsbeispiel einer Messvorrichtung 10 dargestellt. Die Messvorrichtung 10 hat eine Weißlichtquelle 11, die divergentes Weißlicht emittiert, das über einen Kollimator 12 als kollimiertes Licht zu einem Strahlteiler 13 geleitet wird. Am Strahlteiler 13 wird das einfallende kollimierte Licht reflektiert und in einer Messrichtung M parallel zu einer optischen Achse OA der Messvorrichtung 10 zu einem in einer Messposition P angeordneten Objektiv 14 geleitet.

Die Messvorrichtung 10 kann mehrere Objektive 14 aufweisen, die beispielsweise an einem drehbaren Revolver 15 angeordnet sein können. Der Revolver 15 kann manuell oder automatisch mittels eines Schrittantriebs 16 gedreht werden, um eines der vorhandenen Objektive 14 in die Messposition P zu bewegen. Die optische Achse OA der Messvorrichtung 10 ist gleichzeitig die optische Achse dessen der Messposition P angeordneten Objektiv 14.

Entlang der optischen Achse OA (in Messrichtung M) vor dem Objektiv 14 hat die Messvorrichtung 10 einen Träger 18 oder eine andere geeignete Halteeinrichtung, um vor dem in Messposition P angeordneten Objektiv ein zu messendes Objekt 19 anzuordnen. Der Träger 18 kann beispielsweise ein Tisch sein.

Die Messvorrichtung 10 hat eine nicht dargestellte Basis, die beispielsweise zum Aufstellen der Messvorrichtung 10 auf einer Grundfläche dient. Ein Maschinenkoordinatensystem X, Y, Z ist unbeweglich gegenüber der Basis angeordnet. Die Z-Achse dieses Koordinatensystems ist parallel zur optischen Achse OA bzw. zur Messrichtung M ausgerichtet.

Das vom Objekt 19 reflektierte und wieser vom Objektiv 14 empfangene Licht wird zurück zum Strahlteiler 13 geleitet und durch den Strahlteiler 13 hindurch weiter entlang der optischen Achse OA zu einer Farbkamera 23 geleitet. Die Farbkamera 23 hat einen Kamerasensor 24 und vorzugsweise außerdem ein Kameraobjektiv 25, das im Lichtweg zwischen dem Strahlteiler 13 und dem Kamerasensor 24 angeordnet ist. Dem Kameraobjektiv 25 bzw. dem Strahlteiler 13 ist eine Sensorfläche 26 des Kamerasensors 24 zugewandt, auf die das vom Strahlteiler 13 kommende Licht einfällt.

Die Farbkamera 23 bzw. der Kamerasensor 24 hat mehrere Farbkanäle und insbesondere drei Farbkanäle, nämlich einen roten Farbkanal R, einen grünen Farbkanal G sowie einen blauen Farbkanal B. Für jeden dieser Farbkanäle R, G, B weist der Kamerasensor 24 mehrere Farbpixel 27 auf. Die Farbpixel 27 eines gemeinsamen Farbkanals sind jeweils für denselben Lichtwellenlängenbereich (hier zum Beispiel rot, grün, blau) lichtsensitiv.

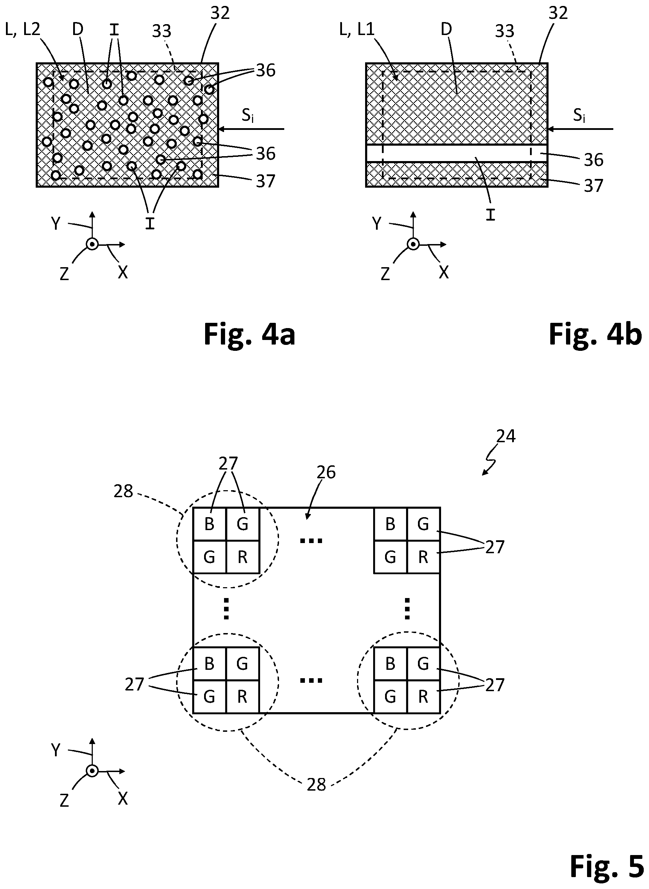

Der Kamerasensor 24 ist stark schematisiert in Figur 5 dargestellt. Die Farbpixel 27 des grünen Farbkanals G sind mit G gekennzeichnet, die Farbpixel 27 des roten Farbkanals sind mit R gekennzeichnet und die Farbpixel 27 des blauen Farbkanals B sind mit B gekennzeichnet.

Die Farbpixel 27 eines gemeinsamen Farbkanals R, G, B sind über die Sensorfläche 26 verteilt angeordnet. Bei dem hier beschriebenen Ausführungsbeispiel bildet zumindest jeweils ein Farbpixel 27 jedes vorhandenen Farbkanals R, G, B, die unmittelbar benachbart zueinander angeordnet sind, eine Pixelgruppe 28. Beispielsgemäß hat jede Pixelgruppe 28 zwei Farbpixel 27 des grünen Farbkanals G und jeweils ein Farbpixel 27 des blauen Farbkanals B sowie des roten Farbkanals R. Die vier Farbpixel 27 jeder Pixelgruppe 28 sind in einem Rechteck bzw. Quadrat angeordnet, wobei das blaue und das rote Farbpixel 27 entlang einer der Diagonalen und die beiden grünen Farbpixel 27 entlang der anderen Diagonalen innerhalb der Pixelgruppe 28 angeordnet sind (Figur 5). Die Anordnung der Farbpixel 27 innerhalb jeder der Pixelgruppen 28 des Kamerasensors 24 ist identisch.

Die Pixelgruppen 28 des Kamerasensors 24 sind matrixförmig in Zeilen und Spalten entlang der Sensorfläche 26 des Kamerasensors 24 angeordnet.

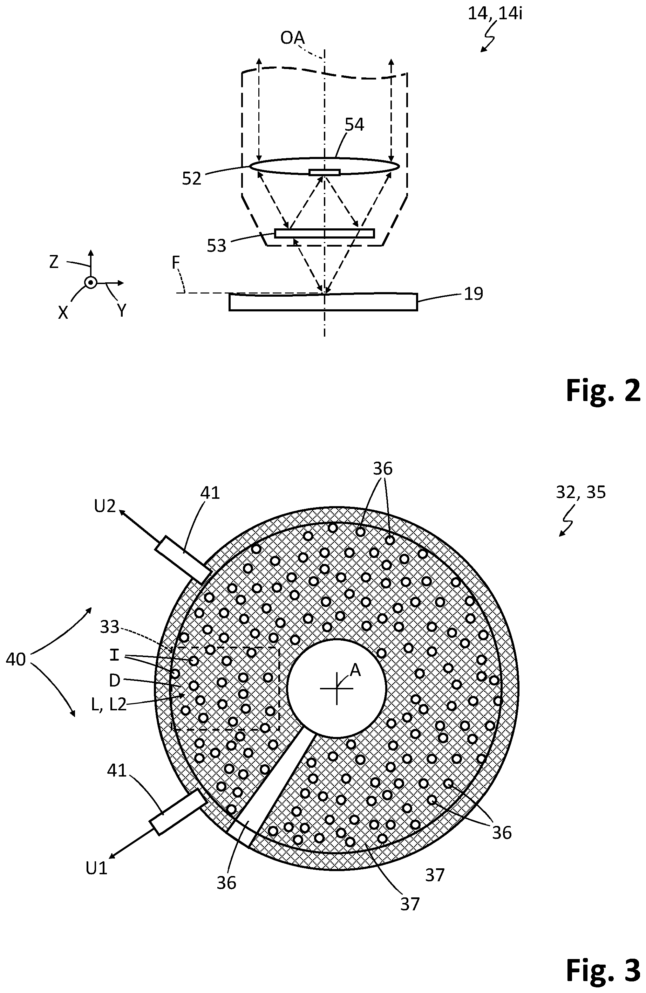

Im Lichtweg zwischen dem Strahlteiler 13 und dem in Messposition P angeordneten Objektiv 14 ist eine Mustereinrichtung 32 vorhanden. Die Mustereinrichtung 32 erstreckt sich entlang einer Ebene, die schräg oder rechtwinklig zur Messrichtung M bzw. zur optischen Achse OA angeordnet ist. Auf einer Fläche der Mustereinrichtung 32 ist ein Zwischenbildbereich 33 der Farbkamera 23 vorhanden. Die Mustereinrichtung 32 ist dazu eingerichtet, Licht, das vom Objektiv 14 zur Farbkamera 23 geleitet wird, in wenigstens einem transparenten Bereich 36 durchzulassen (Transmission) und in wenigstens einem intransparenten Bereich 37 zu blockieren (Reflexion und/oder Absorption) und auf diese Weise im Zwischenbildbereich 33 ein Lichtmuster L zu erzeugen. Beispiele für Lichtmuster L und Ausführungsformen der Mustereinrichtung 32 sind in den Figuren 3, 4a und 4b stark vereinfacht schematisch dargestellt.

Ein Lichtmuster L innerhalb des Zwischenbildbereichs 33 kann innerhalb des Zwischenbildbereichs 33 während eines Messverfahrens bzw. während eines optionalen Prüfverfahrens VP (wird nachfolgend noch erläutert) zeitlich und räumlich variieren. Die Erzeugung eines gewünschten Lichtmusters L kann prinzipiell auf unterschiedliche Arten erreicht werden.

In den Figuren 4a und 4b ist beispielhaft stark schematisiert eine Mustereinrichtung 32 dargestellt, die mittels eines Steuersignals Sᵢ einer Steuereinheit 34 steuerbar ist. Die ansteuerbare Mustereinrichtung 32 kann beispielsweise eine Platte oder Scheibe sein, deren Transparenz lokal verändert werden kann, um den wenigstens einen transparenten Bereich 36 und den wenigstens einen transparenten Bereich 37 zu erzeugen, so dass ein entsprechendes Lichtmuster L mit wenigstens einen beleuchteten Bereich I und wenigstens einem unbeleuchteten Bereich D aufweist. Zur Erzeugung des wenigstens einen beleuchteten Bereichs I hat die Mustereinrichtung 32 daher an der betreffenden Stelle einen transparenten Bereich 36, so dass Licht vom Objektiv 14 durch die Mustereinrichtung 32 hindurch in den Zwischenbildbereich 33 gelangt. Außerhalb des wenigstens einen beleuchteten Bereichs I ist die Mustereinrichtung 32 für das verwendete Weißlicht intransparent (intransparenter Bereich 37), so dass Licht außerhalb des wenigstens einen beleuchteten Bereichs I nicht in den Zwischenbildbereich 33 gelangt und dadurch der wenigstens eine unbeleuchtete Bereich D im Zwischenbildbereich 33 gebildet wird.

Das Lichtmuster L gemäß Figur 4b entspricht einem ersten Lichtmustertyp L1 und hat einen einzigen beleuchteten Bereich I, der beispielsgemäß streifenförmig ausgeführt ist. Der streifenförmige beleuchtete Bereich I kann sich in einer Richtung X vollständig durch den Zwischenbildbereich 33 erstrecken und rechtwinklig dazu in einer Richtung Y eine konstante oder sich ändernde Breite aufweisen. Allgemein kann das Lichtmuster L des ersten Lichtmustertyps L1 einen zusammenhängenden beleuchteten Bereich I im Zwischenbildbereich 33 aufweisen, dem mehrere vorzugsweise in einer Zeile nebeneinander angeordnete Pixelgruppen zugeordnet sind, die somit beleuchtet werden.

Das Lichtmuster L nach Figur 4a entspricht einem zweiten Lichtmustertyp L2 mit einer Mehrzahl von punktförmigen beleuchteten Bereichen I im Zwischenbildbereich 33, die sozusagen jeweils einen Lichtfleck bilden.

Sowohl beim ersten Lichtmustertyp L1, als auch beim zweiten Lichtmustertyp L2 kann das jeweils im Zwischenbildbereich 33 erzeugt Lichtmuster L variieren, insbesondere dadurch, dass der wenigstens eine beleuchtete Bereich I seine Position verändert und sich sozusagen durch den Zwischenbildbereich 33 bewegt.

Bei dem in Figur 3 dargestellten Ausführungsbeispiel der Mustereinrichtung 32 ist die Mustereinrichtung 32 durch eine um eine Drehachse A drehbar antreibbare Musterscheibe 35 gebildet. Die Musterscheibe 35 hat vorzugsweise eine kreisrunde Form. Die Drehachse A kann parallel zur optischen Achse OA ausgerichtet sein und ist vorzugsweise geneigt gegenüber der optischen Achse OA, wie es im Zusammenhang mit Figur 1 erläutert wurde. Durch die Schrägstellung der Mustereinrichtung 32 können unerwünschte Störlichtreflexionen vermieden werden, die entstehen können, wenn von der Weißlichtquelle 11 emittiertes Weißlicht über den Strahlteiler 13 auf die Mustereinrichtung 32 umgelenkt wird und zumindest teilweise auf der Mustereinrichtung 32 reflektiert werden könnte. Durch die Schrägstellung werden solche etwaigen Reflexionen nicht über den Strahlteiler 13 zur Farbkamera 23 reflektiert.

Die in Figur 3 dargestellte Musterscheibe 35 hat in unterschiedlichen Zonen um die Drehachse A zur Bildung des wenigstens einen gewünschten Lichtmusters L mehrere transparente Bereiche 36 und ist ansonsten für das verwendete Weißlicht lichtundurchlässig, wiest dort also weigstens einen intransparenten Bereich 37 auf. Zur Bildung eines einer Mehrzahl von Lichtflecken bzw. punktförmigen beleuchteten Bereichen I aufweisenden Lichtmusters L hat die Musterscheibe 35 in einer Umfangszone um die Drehachse A unregelmäßig verteilte punktförmige transparente Bereiche 36, die auch als "Pinholes" bezeichnet werden können. In einer benachbarten Zone hat die Musterscheibe 35 außerdem einen streifenförmigen transparenten Bereich 36, der sich quer zur Umfangsrichtung und vorzugsweise radial zur Drehachse A erstreckt und dessen Breite beispielsgemäß ausgehend von der Drehachse A nach radial außen zunimmt.

Wenn sich die Musterscheibe 35 um die Drehachse A dreht, werden die punktförmigen transparenten Bereiche 36 und/oder der wenigstens eine streifenförmige transparente Bereich 36 durch den Zwischenbildbereich 33 bewegt, wodurch dort das gewünschte Lichtmuster L des ersten Lichtmustertyps L1 oder des zweiten Lichtmustertyps L2 erzeugt wird. Durch die transparenten Bereiche 36 der Musterscheibe 35 kann Licht, das am Objekt 19 reflektiert und vom Objektiv 14 empfangen wurde, durch die Musterscheibe 35 hindurch in den Zwischenbildbereich 33 gelangen und bildet dort einen beleuchteten Bereich I. Da die Musterscheibe 35 außerhalb der transparenten Bereiche 36 undurchlässig ist für das verwendete Weißlicht, entstehen außerhalb der im Zwischenbildbereich 33 positionierten transparenten Bereiche 36 (also in dem wenigstens eine intransparenten Bereich 37) der wenigstens eine unbeleuchtete Bereich D.

Der Musterscheibe 35 ist eine Positionserfassungseinrichtung 40 zugeordnet, die zumindest eine definierte Position und beispielsgemäß eine definierte Drehlage um die Drehachse A detektiert. Die Positionserfassungseinrichtung 40 kann hierzu wenigstens einen und beispielsgemäß zwei Sensoren 41 aufweisen, die dazu eingerichtet sind, eine Markierung, eine Geometrie oder eine andere definierte Eigenschaft an oder auf der Musterscheibe 35 zu detektieren, so dass daraus jeweils eine zugeordnete definierte Drehlage der Musterscheibe 35 um die Drehachse A erkannt werden kann. Jeder vorhandene Sensor 41 ist dazu eingerichtet, beim Erkennen der ihm jeweils zugeordneten definierten Drehlage ein entsprechendes Sensorsignal U1 bzw. U2 zu erzeugen. Wie erläutert sind beispielsgemäß zwei Sensoren 41 vorhanden, die in Drehrichtung um die Drehachse A gesehen auf entgegengesetzten Seiten des Zwischenbildbereichs 33 angeordnet sind und dazu eingerichtet sind, bei einer Drehung der Musterscheibe 35 das Eintreten des streifenförmigen transparenten Bereichs 36 in den Zwischenbildbereich zu detektieren und dabei ein erstes Sensorsignal U1 zu erzeugen und beim Austreten des streifenförmigen transparenten Bereichs 36 aus dem Zwischenbildbereich 33 ein zweites Sensorsignal U2 zu erzeugen. Die Sensoren 41 sind hierzu beispielsweise als Lichtschranken ausgebildet, die im Durchlicht arbeiten, wie es beispielhaft in Figur 1 gezeigt ist.

Für das konfokale Messverfahren wird im Zwischenbildbereich 33 das Lichtmuster L des zweiten Lichtmustertyps L2 benötigt. Daher dient für den Modus des konfokalen Messverfahrens das zweite Sensorsignal U2 als Startsignal für den Beginn des konfokalen Messverfahrens. Das zweite Sensorsignal U2 zeigt an, dass der streifenförmige transparente Bereich 36 der Musterscheibe 35 den Zwischenbildbereich 33 verlassen hat und somit im Zwischenbildbereich ein Lichtmuster L gemäß des zweiten Lichtmustertyps L2 erzeugt wird. Sobald das erste Sensorsignal U1 anzeigt, dass der streifenförmige transparente Bereich 36 der Musterscheibe 35 wieder in den Zwischenbildbereich 33 eintritt, wird das konfokale Messverfahren beendet.

Bei allen anderen Messverfahren unter Verwendung der Musterscheibe 35 als Mustereinrichtung 32 (Messverfahren basierend auf Weißlichtinterferometrie und Messverfahren basierend auf Fokusvariation) wird das erste Sensorsignal U1 als Startsignal und das zweite Sensorsignal U2 als Stoppsignal für das betreffende Messverfahren verwendet, da für diese Messverfahren im Zwischenbildbereich 33 ein Lichtmuster L gemäß des ersten Lichtmustertyps L1 benötigt wird.

Die Messvorrichtung 10 weist außerdem eine Positioniereinrichtung 44 auf. Die Positioniereinrichtung 44 ist dazu eingerichtet, eine Fokusposition in Messrichtung M zu verändern. Die Positioniereinrichtung 44 kann hierzu beispielsweise einen Piezoantrieb aufweisen. Die Positioniereinrichtung 44 kann beispielsweise die Position des Objektivs 14 in Messrichtung M verändern, das sich in der Messposition P befindet. Zusätzlich oder alternativ dazu kann die Positioniereinrichtung 44 die Position des Trägers 18 und somit des Objekts 19 in Messrichtung M verändern, was in Figur 1 gestrichelt veranschaulicht ist. Die Positioniereinrichtung 44 ist jedenfalls dazu eingerichtet, die Position einer Fokusebene F des in der Messposition P angeordneten Objektivs 14 relativ zu dem zu messenden Objekt 19 in Messrichtung M zu verändern. Die jeweils aktuelle Fokusposition kann vorzugsweise sensorisch mittels eines Fokus-Positionssensors 45 erfasst werden, der ein die Fokusposition beschreibendes Fokuspositionssignal ZF erzeugt.

Die Messvorrichtung 10 hat zusätzlich zu der Steuereinheit 34 eine Auswerteeinheit 46. Die Steuereinheit 34 und die Auswerteeinheit 46 können in einer gemeinsamen Recheneinrichtung 47 realisiert sein. Der Recheneinrichtung 47 und insbesondere der Auswerteeinheit 46 werden Kamerasensorsignale Cᵢ des Kamerasensors 24 sämtlicher Farbpixel 27 zur Auswertung bereitgestellt. Beispielsgemäß werden der Recheneinrichtung 47 und somit der Auswerteeinheit 46 und/oder der Steuereinheit 34 die Sensorsignale U1, U2 der Positionserfassungseinrichtung 40 und das Fokuspositionssignal ZF des Fokus-Positionssensors 45 bereitgestellt. Die Recheneinrichtung 47 und insbesondere die Steuereinheit 34 erzeugen Steuersignale Sᵢ (i = 1, 2, 3, ..., n), insbesondere für die Positioniereinrichtung 44, gegebenenfalls den optional vorhandenen Schrittantrieb 16 oder für die optional ansteuerbare Mustereinrichtung 32 (Figuren 4a und 4b) oder für einen nicht dargestellten Drehantrieb der um die Drehachse A drehbaren Musterscheibe 35 (Figuren 1 und 3).

Die Messvorrichtung 10 kann optional weitere optische Bauteile aufweisen. Insbesondere sind im Lichtweg zwischen dem Strahlteiler 13 bzw. der Mustereinrichtung 32 einerseits und dem in der Messposition P angeordneten Objektiv 14 andererseits eine Feldlinseneinheit 50 und eine Tubuslinseneinheit 51 vorhanden. Das von der Weißlichtquelle 11 emittierte Weißlicht wird zunächst durch die Feldlinseneinheit 50 und anschließend durch die Tubuslinseneinheit 51 zum Objektiv 14 geleitet.

Optional kann zwischen der Tubuslinseneinheit 51 und dem in der Messposition P angeordneten Objektiv 14 eine weitere Einrichtung zur Störlichtreduzierung vorhanden sein, die beispielsweise einen polarisierten Strahlteiler und eine Viertelwellenplatte (A/4-Platte) aufweist.

Eines der vorhandenen Objektive 14 kann als Interferometerobjektiv 14i ausgebildet sein, so dass mittels der Messvorrichtung 10 ein auf Weißlichtinterferometrie beruhendes Messverfahren ausgeführt werden kann. Ein Beispiel für ein Interferometerobjektiv 14i ist vereinfacht schematisch in Figur 2 dargestellt. Das Interferometerobjektiv 14i hat eine Objektivlinse 52, die zur Fokussierung des einfallenden Weißlichts in der Fokusebene F dient. Das Weißlicht wird im Anschluss an die Objektivlinse 52 durch einen Strahlteiler 53 teilweise transmittiert in die Fokusebene F, bzw. in Richtung zum messenden Objekt 19 und teilweise in Richtung zur Objektivlinse 52 zurückreflektiert. Im Bereich der optischen Achse OA ist ein Reflektor 54 angeordnet, der das am Strahlteiler 53 des Interferometerobjektivs 14i reflektierte Licht wieder zurück in Richtung zum Strahlteiler 53 reflektiert. Durch den Strahlteiler 53 und den Reflektor 54 ist ein Referenzlichtweg LR gebildet. Ein Messlichtweg LM ist zwischen der Objektivlinse 52 und dem zu messenden Objekt 19, bzw. der Fokusebene F, gebildet. Das am zu messenden Objekt 19 reflektierte Licht gelangt zurück in das Interferometerobjektiv 14i und wird im Anschluss an den Strahlteiler 53 mit dem Licht überlagert, das entlang des Referenzlichtweges LR geleitet wird. Dabei kommt es zur Interferenz (verstärkende und/oder abschwächende Interferenz), wobei ein Interferenzmuster entsteht, das vom Kamerasensor 24 der Farbkamera 23 detektiert und in der Auswerteeinheit 46 basierend auf den erhaltenen Kamerasensorsignalen Cᵢ ausgewertet werden kann.

Das in Figur 2 beispielhaft dargestellte Interferometerobjektiv 14i basiert auf dem Prinzip eines Mireau-Interferometers. Auch andere Interferometerarten könnten alternativ hierzu realisiert werden, wie beispielsweise ein Linnik-Interferometer.

Neben einem Weißlicht-interferometrischen Messverfahren unter Verwendung des Interferometerobjektivs 14i ist die Messvorrichtung 10 dazu eingerichtet, ein Messverfahren basierend auf einer Fokusvariation durchzuführen. Bei diesem Verfahren wird die Fokusposition der Fokusebene F in einem Fokusvariationsbereich FV (Figur 1) durch die Positioniereinrichtung 44 verändert, vorzugsweise stillstandslos verändert. Dabei können die Kamerasensorsignale Cᵢ einer bestimmten Fokusposition basierend auf dem Fokuspositionssignal ZF des Fokus-Positionssensors 45 zugeordnet werden. Bei einer solchen Ausführung kann beispielsweise das für die Messung verwendete Objektiv 14 entlang des Fokusvariationsbereichs FV stillstandslos bewegt werden, wobei unnötige Beschleunigungen zum Anhalten und erneuten Bewegen des Objektivs 14 vermieden werden, wie es der Fall wäre, wenn die unterschiedlichen Fokuspositionen schrittweise eingestellt würden.

Für das auf Variation der Fokusposition basierende Messverfahren kann zusätzlich zu der stationären Weißlichtquelle 11 eine Dunkelfeldbeleuchtung 57 vorhanden sein, die beispielsweise an einem der vorhandenen Objektive 14 angeordnet ist oder angeordnet werden kann. Die Dunkelfeldbeleuchtung 57 kann optional lösbar an mehreren vorhandenen Objektiven 14 anbringbar sein.

Die Dunkelfeldbeleuchtung weist eine oder mehrere Beleuchtungselemente 58 auf, beispielsweise Leuchtdioden, wobei jedes Beleuchtungselement 58 Weißlicht emittieren kann. Alternativ dazu können auch Beleuchtungselemente 58 für unterschiedliche Lichtwellenlängenbereiche vorhanden sein, deren Licht kombiniert wird, um breitbandiges Weißlicht zu erzeugen. Die Beleuchtungselemente 58 können verteilt in Umfangsrichtung um die optische Achse OA angeordnet sein, so dass die Dunkelfeldbeleuchtung 57 nach Art eines Ringlichts ausgebildet ist, das das Objektiv 14 ringförmig umschließt.

Die Dunkelfeldbeleuchtung 57 ist derart ausgebildet, dass abgestrahltes Licht nicht unmittelbar in das Objektiv 14 einfällt, sondern das Objektiv 14 nur Licht empfängt, das vom zu messenden Objekt 19 reflektiert wird. Die Dunkelfeldbeleuchtung 57 kann das von den Beleuchtungselementen 58 emittierte Licht durch eine optische Einrichtung 59 beeinflussen, insbesondere um die Abstrahlrichtung einzustellen. Die optische Einrichtung 59 kann wenigstens eine Linse, wenigstens einen Reflektor, und/oder wenigstens ein anderes optisches Element aufweisen. Eine in der optischen Einrichtung 59 vorhandene Linse kann beispielsweise als Fresnel-Linse ausgebildet sein.

Die Messvorrichtung 10 kann außerdem zur Durchführung eines konfokalen Messverfahrens eingerichtet sein. Für dieses Messverfahren wird beispielsweise ein zeitlich variierendes Lichtmuster L des zweiten Lichtmustertyps L2 durch die Mustereinrichtung 32 erzeugt. Scanner, beispielsweise Laserscanner oder ähnliches werden für das konfokale Messverfahren nicht benötigt.

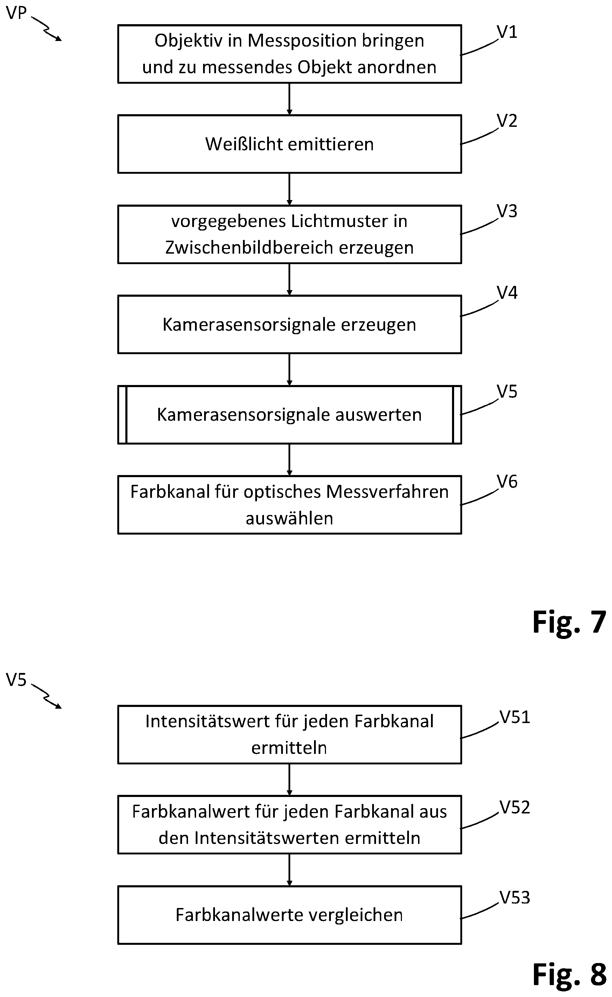

Die Messvorrichtung 10 ist dazu eingerichtet, ein Verfahren zur Voreinstellung der Messvorrichtung 10 durchzuführen, das als Auswahlverfahren bezeichnet werden kann. Das Verfahren dient dazu, einen möglichst geeigneten Farbkanal R, G, B für ein anschließendes Messverfahren zu ermitteln. Im einfachsten Fall kann ein voreingestellter Standardfarbkanal, verwendet werden, beispielsgemäß der Farbkanal mit den meisten Pixeln auf der Sensorfläche 26 des Kamerasensors 24 (hier: grüner Farbkanal G). Bei einer bevorzugten Ausgestaltung der Messvorrichtung 10 ist diese dazu eingerichtet im Rahmen der Voreinstellung bzw. Auswahl des Farbkanals zu prüfen, ob der Standardfarbkanal (hier: grüner Farbkanal G) oder ein anderer Farbkanal am besten für eine nachfolgende Messung geeignet ist. Für dieses optionale Prüfverfahren VP im Rahmen der Voreinstellung wird bei dem anhand der Figuren 7 und 8 dargestellten Ausführungsbeispiel wie folgt vorgegangenen:

Zunächst wird das gewünschte Objektiv 14 in die Messposition P gebracht und das zu messende Objekt 19 vor dem Objektiv 14 angeordnet (erster Verfahrensschritt V1). Die Weißlichtquelle 11 wird aktiviert, um Weißlicht zu emittieren (zweiter Verfahrensschritt V2) und mittels der Mustereinrichtung 32 (zum Beispiel Musterscheibe 35) wird im Zwischenbildbereich ein Lichtmuster L des ersten Lichtmustertyps L1 und/oder des zweiten Lichtmustertyps L2 erzeugt (dritter Verfahrensschritt V3). Während dieses wenigstens eine Lichtmuster L erzeugt wird, werden die vom Kamerasensor 24 erzeugten Kamerasensorsignale Cᵢ (vierter Verfahrensschritt V4) der Auswerteeinheit 46 bereitgestellt und in der Auswerteeinheit 46 ausgewertet (fünfter Verfahrensschritt V5). Basierend auf diesem Auswerteergebnis kann dann in einem sechsten Verfahrensschritt V6 einer der Farbkanäle R oder G oder B für das anschließend an dem zu messenden Objekt 19 durchzuführende Messverfahren ausgewählt werden.

Die im fünften Verfahrensschritt V5 erfolgte Auswertung ist für ein bevorzugtes Ausführungsbeispiel im Flussdiagramm aus Figur 8 genauer dargestellt. In einem ersten Subschritt V51 wird für jeden Farbkanal R, G, B jeweils ein Intensitätswert WR, WG, WB für jeden Farbkanal R, G, B ermittelt. Der Intensitätswert beschreibt die Strahlungsintensität für das vom Kamerasensor 24 empfangene Licht in dem Lichtwellenbereich, der dem jeweiligen Farbkanal R bzw. G bzw. B entspricht. Dabei kann optional auch die Strahlungsleistung der Weißlichtquelle 11 für den jeweiligen Lichtwellenlängenbereich des betreffenden Farbkanals R bzw. G bzw. B berücksichtigt werden, so dass der Intensitätswert WR, WG, WB vorzugsweise den Reflexionsgrad bzw. die Reflektanz für das zu messende Objekt 19 charakterisiert. Bei einem Ausführungsbeispiel können die Intensitätswerte beispielsweise wie folgt ermittelt werden:
roter Farbkanal R: $WR = \frac{{PR}_{C}}{{PR}_{E}}$ (1)
grüner Farbkanal G: $WG = \frac{{PG}_{C}}{{PG}_{E}}$ (2)
blauer Farbkanal B: $WB = \frac{{PB}_{C}}{{PB}_{E}}$ (3)

In diesen Gleichungen bezeichnet PR die Strahlungsleistung für den Lichtwellenlängenbereich des roten Farbkanals R, PG, die Strahlungsleistung für den Lichtwellenbereich des grünen Farbkanals G und PB, die Strahlungsleistung für den Lichtwellenbereich des blauen Farbkanals B. Der dabei verwendete Index "C" kennzeichnet die Strahlungsleistung, die vom Kamerasensor 24 empfangen wurde und der Index "E" kennzeichnet die Strahlungsleistung, die von der Weißlichtquelle 11 emittiert wurde. Der Intensitätswert WR, WG, WB für den jeweiligen Farbkanal R bzw. G bzw. B wird hier durch den Quotienten der im jeweiligen Lichtwellenlängenbereich empfangenen Strahlungsleistung geteilt durch die emittierte Strahlungsleistung gebildet. Durch diese Intensitätswerte WR, WG, WB wird somit der Reflexionsgrad für das zu messende Objekt 19 für den jeweiligen Farbkanal R, G, B bzw. den diesem Farbkanal zugeordneten Lichtwellenlängenbereich beschrieben.

Um für ein nachfolgendes Messverfahren einen geeigneten Farbkanal R oder G oder B auszuwählen, können beispielsweise die Intensitätswerte WR, WG, WB miteinander verglichen und der Farbkanal ausgewählt werden, der den höchsten Betrag des Intensitätswertes aufweist.

Bei dem hier realisierten Prüfverfahren VP wird in einem zweiten Subschritt V52 aus jedem der Intensitätswerte WR, WG, WB jeweils ein Farbkanalwert KR, KG, KB berechnet:
roter Farbkanal R: $KR = \frac{WR}{DR}$ (4)
grüner Farbkanal G: $KG = \frac{WG}{DG}$ (5)
blauer Farbkanal B: $KB = \frac{WB}{DB}$ (6)

In diesen Gleichungen ist DR die Pixeldichte (oder die Gesamtzahl) der Farbpixel 27 des roten Farbkanals R, DG die Pixeldichte (oder die Gesamtzahl) der Farbpixel 27 des grünen Farbkanals G und DB die Pixeldichte (oder die Gesamtzahl) der Farbpixel 27 des blauen Farbkanals B. Die Pixeldichte beschreibt die Anzahl der jeweiligen Farbpixel pro Flächeneinheit. Bei dem hier verwendeten Kamerasensor 24 ist die Pixeldichte (oder die Gesamtzahl) DG der Farbpixel 27 des grünen Farbkanals G doppelt so groß wie die Pixeldichte (oder die Gesamtzahl) DR und DB der roten Farbkanal R, bzw. den blauen Farbkanal B (vergleiche Figur 5).

In einem dritten Subschritt V53 werden die Farbkanalwerte KR, KG, KB miteinander verglichen. Das Vergleichsergebnis stellt das Auswerteergebnis dar und liefert den Farbkanalwert mit dem größten Betrag. Dieser Farbkanal R oder G oder B kann dann im sechsten Verfahrensschritt V6 für das optische Messverfahren ausgewählt werden.

Durch das Prüfverfahren VP im Rahmen das Auswahl oder Voreinstellung eines Farbkanals können die optischen Eigenschaften des zu messenden Objekts 19 berücksichtigt und der am besten geeignete Farbkanal R oder G oder B für das Messverfahren ausgewählt werden. Das anschließend durchgeführte Messverfahren kann ein konfokales Messverfahren, ein Messverfahren durch Variation der Fokusebene F oder ein auf Weißlicht-Interferometrie beruhendes Messverfahren oder eine Kombination von mehreren zeitlich nacheinander durchgeführten Messverfahren sein.

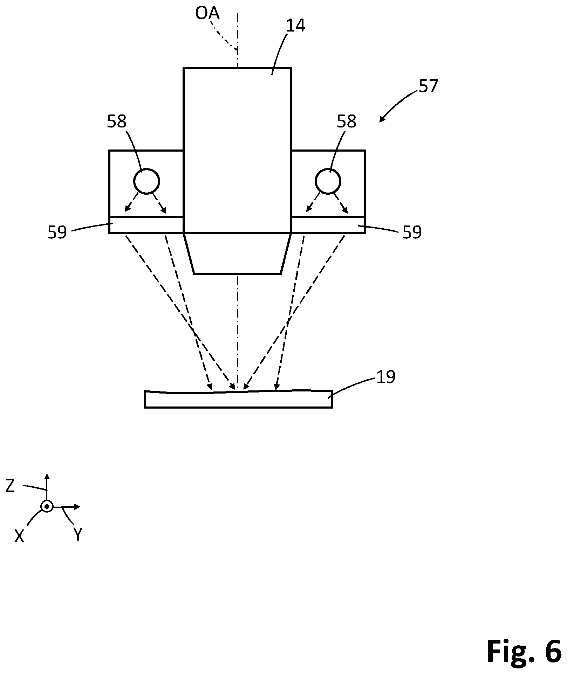

Für das Prüfverfahren VP kann anstelle der stationären, internen Weißlichtquelle 11 auch eine externe Weißlichtquelle verwendet werden, die beispielsweise an dem in der Messposition angeordneten Objektiv angebracht wird (z.B. die Dunkelfeldbeleuchtung 57 nach Figur 6)

Die Erfindung betrifft eine Messvorrichtung 10 sowie ein Verfahren zur Voreinstellung, um für ein optisches Messverfahren einen geeigneten Farbkanal R, G oder B für ein anschließend durchzuführendes optisches Messverfahren auszuwählen. Es kann ein Standardfarbkanal aus den mehreren Farbkanälen R, G, B ausgewählt und für die Messung verwendet werden. Bei einer bevorzugten Ausführung der Erfindung kann die Eignung dieses Standardfarbkanals mittels eines Prüfverfahrens VP geprüft werden. Für dieses optionale Prüfverfahrens VP kann mittels einer Weißlichtquelle 11 wird dazu Weißlicht über ein in einer Messposition P angeordnetes Objektiv 14 der Messvorrichtung 10 auf ein zu messendes Objekt 19 abgestrahlt, dort reflektiert und wieder vom Objektiv 14 empfangen. Das vom Objekt 19 reflektierte und vom Objektiv 14 empfangene Licht wird über einen an einer Mustereinrichtung 32 vorhandenen Zwischenbildbereich 33 auf einen Kamerasensor 24 einer Farbkamera 23 geleitet. Im Zwischenbildbereich 33 wird durch die Mustereinrichtung 35 ein Lichtmuster L erzeugt, das während des Prüfverfahrens VP zeitlich variieren kann. Das Lichtmuster L kann dabei einem ersten Lichtmustertyp L1 mit einem streifenförmigen beleuchteten Bereich, einem zweiten Lichtmustertyp L2 mit mehreren punktförmig beleuchteten Bereichen oder einer Abfolge aus Lichtmustern L beider Lichtmustertypen L1, L2 entsprechen. Die dabei vom Kamerasensor 24 erzeugten Kamerasensorsignale Cᵢ werden in einer Auswerteeinheit 46 ausgewertet und basierend darauf für ein nachfolgendes Messverfahrens ein geeigneter Farbkanal R oder G oder B des Kamerasensors 24 bzw. der Farbkamera 23 ausgewählt.

### Bezugszeichenliste:

- 10: Messvorrichtung
- 11: Weißlichtquelle
- 12: Kollimator
- 13: Strahlteiler
- 14: Objektiv
- 14i: Interferometerobjektiv
- 15: Revolver
- 16: Schrittantrieb

- 18: Träger
- 19: Objekt

- 23: Farbkamera
- 24: Kamerasensor
- 25: Kameraobjektiv
- 26: Sensorfläche
- 27: Farbpixel
- 28: Pixelgruppe

- 32: Mustereinrichtung
- 33: Zwischenbildbereich
- 34: Steuereinheit
- 35: Musterscheibe
- 36: transparenter Bereich
- 37: intransparenter Bereich

- 40: Positionserfassungseinrichtung
- 41: Sensor der Positionserfassungseinrichtung

- 44: Positioniereinrichtung
- 45: Fokus-Positionssensor
- 46: Auswerteeinheit
- 47: Recheneinrichtung
- 50: Feldlinseneinheit
- 51: Tubuslinseneinheit
- 52: Objektivlinse
- 53: Strahlteiler des Interferometerobjektivs
- 54: Reflektor

- 57: Dunkelfeldbeleuchtung
- 58: Beleuchtungselement
- 59: optische Einrichtung

- A: Drehachse
- B: blauer Farbkanal
- Cᵢ: Kamerasensorsignal (i = 1, 2, 3, ..., n)
- D: unbeleuchteter Bereich im Zwischenbildbereich
- DB: Pixeldichte der Farbpixel des blauen Farbkanals B
- DG: Pixeldichte der Farbpixel des grünen Farbkanals G
- DR: Pixeldichte der Farbpixel des roten Farbkanals R
- F: Fokusebene
- FV: Fokusvariationsbereich
- G: grüner Farbkanal
- I: beleuchteter Bereich im Zwischenbildbereich
- KB: Farbkanalwert für den blauen Farbkanal B
- KG: Farbkanalwert für den grünen Farbkanal G
- KR: Farbkanalwert für den roten Farbkanal R
- L: Lichtmuster
- L1: erster Lichtmustertyp
- L2: zweiter Lichtmustertyp
- LM: Messlichtweg
- LR: Referenzlichtweg
- M: Messrichtung
- OA: Optische Achse der Messvorrichtung
- P: Messposition
- R: roter Farbkanal
- Sᵢ: Steuersignal (i = 1, 2, 3, ..., n)
- U1: erstes Sensorsignal
- U2: zweites Sensorsignal
- VP: Prüfverfahren
- V1: erster Verfahrensschritt
- V2: zweiter Verfahrensschritt
- V3: dritter Verfahrensschritt
- V4: vierter Verfahrensschritt
- V5: fünfter Verfahrensschritt
- V51: erster Subschritt
- V52: zweiter Subschritt
- V53: dritter Subschritt
- V6: sechster Verfahrensschritt
- WB: Intensitätswert für den blauen Farbkanal B
- WG: Intensitätswert für den grünen Farbkanal G
- WR: Intensitätswert für den roten Farbkanal R
- ZF: Fokuspositionssignal

## Patentansprüche

1. Messvorrichtung (10) für eine optische Messung aufweisend:
- eine Weißlichtquelle (11),
- eine Farbkamera (23) mit mehreren Farbkanälen für jeweils einen Lichtwellenlängenbereich, aufweisend einen Kamerasensor (24), der mehrere über die Sensorfläche (26) des Kamerasensors (24) verteilt angeordnete Pixelgruppen (28) aufweist, wobei jede Pixelgruppe (28) jeweils mindestens ein Farbpixel (27) für jeden vorhandenen Farbkanal (R, G, B) aufweist,
- wenigstens ein Objektiv (14), das in einer Messposition (P) im Lichtweg zwischen dem Objekt (19) und dem Kamerasensor (24) positioniert werden kann,
- eine Positioniereinrichtung (44), die dazu eingerichtet ist, in einer Messrichtung (M) eine Fokusposition zu verändern, die in der Messrichtung (M) durch eine Relativposition zwischen einer Fokusebene (F) des in der Messposition (P) angeordneten Objektivs (14) und dem Objekt (19) definiert ist,
- eine Mustereinrichtung (32), die im Lichtweg zwischen dem Objektiv (14) und dem Kamerasensor (24) angeordnet und dazu eingerichtet ist, innerhalb eines Zwischenbildbereichs (33) der Farbkamera (23) ein veränderbares Lichtmuster (L) mit wenigstens einem beleuchteten Bereich (I) zu erzeugen, wobei das Lichtmuster (L) außerhalb des wenigstens einen beleuchteten Bereichs (I) unbeleuchtet ist,
- eine mit dem Kamerasensor (24) und der Positioniereinrichtung (44) kommunikationsverbundene Recheneinrichtung (47), dazu eingerichtet ist, im Rahmen eines Verfahrens zur Voreinstellung einen einzigen Farbkanal (R oder G oder B) für ein nachfolgendes Messverfahren auszuwählen.

2. Messvorrichtung nach Anspruch 1, die außerdem dazu eingerichtet ist, ein konfokales Messverfahren und/oder ein die Fokusposition variierendes Messverfahren und/oder ein Weißlicht-Interferometrie verwendendes Messverfahren einzustellen.

3. Messvorrichtung nach Anspruch 2, wobei die Positioniereinrichtung (44) dazu eingerichtet ist, die Fokusposition während des die Fokusposition variierenden Messverfahrens entlang eines Fokusvariationsbereichs (FV) stillstandlos zu verändern.

4. Messvorrichtung nach einem der vorhergehenden Ansprüche, die dazu eingerichtet ist, im Rahmen des Verfahrens zur Voreinstellung ein Prüfverfahren (VP) durchzuführen, um eine vorgegebene Standardeinstellung zu prüfen und dabei insbesondere dazu eingerichtet ist, Kamerasensorsignale (Cᵢ) des Kamerasensors (24) aller Farbkanäle (R, G, B) zu erfassen, während ein vorgegebenes Lichtmuster (L) im Zwischenbildbereich (33) erzeugt wird, und die außerdem dazu eingerichtet ist basierend auf den Kamerasensorsignale (Cᵢ) des Kamerasensors (24) den Farbkanal (R oder G oder B) für das nachfolgende Messverfahren auszuwählen.

5. Messvorrichtung nach Anspruch 4 und nach Anspruch 2 oder 3, wobei die Mustereinrichtung (32) dazu eingerichtet ist, während des Prüfverfahrens (VP) im Zwischenbildbereich (33) das Lichtmuster (L) oder mehrere Lichtmustertypen (L1, L2) nacheinander erzeugt werden, die für das nachfolgende Messverfahren benötigt werden.

6. Messvorrichtung nach Anspruch 4 oder 5, wobei die Recheneinrichtung (47) dazu eingerichtet ist, basierend auf den während des Prüfverfahrens (VP) vom Kamerasensor (24) bereitgestellten Kamerasensorsignale (Cᵢ) einen die Strahlungsleistung beschreibenden Intensitätswert (WB, WG, WR) für jeden vorhandenen Farbkanal (R, G, B) zu ermitteln und basierend auf den Intensitätswerten (WB, WG, WR) einen der Farbkanäle für das nachfolgende Messverfahren auszuwählen.

7. Messvorrichtung nach Anspruch 6, wobei die Recheneinrichtung (47) dazu eingerichtet ist, für jeden vorhandenen Farbkanal einen Farbkanalwert (KR, KG, KB) zu ermitteln, der ein Verhältnis zwischen dem Intensitätswert (WB, WG, WR) des betreffenden Farbkanals und der Pixeldichte des betreffenden Farbkanals (R, G, B) charakterisiert.

8. Messvorrichtung nach einem der vorhergehenden Ansprüche, wobei ein Fokus-Positionssensor (45) vorhanden ist, der dazu eingerichtet ist, der Recheneinrichtung (47) ein aktuelles Fokuspositionssignal (ZF) bereitzustellen, das die Relativposition zwischen der Fokusebene (F) und dem Objekt (14) in Messrichtung (M) charakterisiert.

9. Messvorrichtung nach einem der vorhergehenden Ansprüche, wobei das Lichtmuster (L) eines ersten Lichtmustertyps (L1) zu jedem Zeitpunkt wenigstens einen zusammenhängenden beleuchteten Bereich (I) aufweist, durch den Licht vom Objektiv (14) auf mehrere unmittelbar nebeneinander angeordnete Farbpixelgruppen (28) gelangt.

10. Messvorrichtung nach einem der vorhergehenden Ansprüche, wobei das Lichtmuster (L) einen streifenförmigen beleuchteten Bereich (I) aufweist.

11. Messvorrichtung nach einem der vorhergehenden Ansprüche, wobei das Lichtmuster (L) eines zweiten Lichtmustertyps (L2) eine Vielzahl von verteilt angeordneten, punktförmigen beleuchteten Bereichen (I) aufweist.

12. Messvorrichtung nach einem der vorhergehenden Ansprüche, wobei die Mustereinrichtung (32) eine schräg oder rechtwinkelig zur Messrichtung (M) ausgerichtete und in zumindest eine Bewegungsrichtung parallel zu ihrer Erstreckungsebene bewegbare Musterscheibe (35) ist, die mehrere transparente Bereiche (36) aufweist, um das Lichtmuster (L) im Zwischenbildbereich (33) zu erzeugen.

13. Messvorrichtung nach Anspruch 12, wobei die Musterscheibe (35) um eine Drehachse (D) drehbar antreibbar ist und der Zwischenbildbereich (33) radial neben der Drehachse (D) angeordnet ist.

14. Messvorrichtung nach Anspruch 12 oder 13, wobei der Musterscheibe (35) eine Positionserfassungseinrichtung (40) zugeordnet ist, die dazu eingerichtet ist, der Recheneinrichtung (47) ein Sensorsignal (U1, U2) bereitzustellen, das zumindest eine definierte Position der Musterscheibe (35) in der wenigstens einen Bewegungsrichtung charakterisiert.

15. Messvorrichtung nach einem der vorhergehenden Ansprüche, wobei eines der vorhandenen Objektive (14) ein Interferometerobjektiv (14i) ist, das dazu eingerichtet ist, einen Messlichtweg (LM) und zusätzlich einen Referenzlichtweg (LR) bereitzustellen, wobei das Objekt (19) im Messlichtweg (LM) angeordnet ist, wenn sich das Interferometerobjektiv (14i) in der Messposition (P) befindet.

16. Verfahren (V) zum Voreinstellen einer Messvorrichtung (10) nach einem der vorhergehenden Ansprüche, wobei das Verfahren umfasst:
- Auswählen eines Standardfarbkanals aus den mehreren Farbkanälen (R, G, B) und wenn eine Prüfung durch die Messvorrichtung oder eine Bedienperson angefordert wurde, Durchführen eines Prüfverfahrens (VP) aufweisend:
o Positionieren eines Objektivs (14) in einer Messposition (P) im Lichtweg einem zu messenden Objekt (19) und einem Kamerasensor (24) einer Farbkamera (23) mit mehreren Farbkanälen (R, G, B) für jeweils einen Lichtwellenlängenbereich, wobei der Kamerasensor (24) mehrere über die Sensorfläche (26) verteilt angeordnete Pixelgruppen (28) aufweist, wobei jede Pixelgruppe (28) jeweils mindestens ein Farbpixel (27) für jeden vorhandenen Farbkanal (R, G, B) aufweist,
o Emittieren von Weißlicht mittels der Weißlichtquelle (11),
o Erzeugen eines vorgegebenen Lichtmusters (L) innerhalb eines Zwischenbildbereichs (33) der Farbkamera (23) im Lichtweg zwischen dem Objektiv (14) und dem Kamerasensor (24), wobei das Lichtmuster (L) wenigstens einen beleuchteten Bereich (I) aufweist und außerhalb des wenigstens einen beleuchteten Bereichs (I) unbeleuchtet ist,
o Erfassen von Kamerasensorsignalen (Cᵢ) des Kamerasensors (24) aller Farbkanäle (R, G, B) während das vorgegebene Lichtmuster (L) erzeugt wird,
o Auswerten der Kamerasensorsignale (Cᵢ) des Kamerasensors (24) aller Farbkanäle (R, G, B) und basierend darauf Auswählen eines einzigen Farbkanals (R oder G oder B) für ein nachfolgendes Messverfahren.
